# EUROPÄISCHE PATENTSCHRIFT

(11) **EP 0 824 033 B1**
(45) Veröffentlichungstag und Bekanntmachung des Hinweises auf die Patenterteilung: **09.04.2003**
(21) Anmeldenummer: 97111807.0
(22) Anmeldetag: 11.07.1997
(51) Int. Cl.: B01D 27/02, B01D 24/12, C02F 1/28

(54) **Filterkartusche mit Sieb in einer Auslassöffnung**
Filter cartridge with sieve in an outlet opening
Cartouche filtrant avec tamis dans un orifice de sortie

(30) Priorität: 13.08.1996 DE 19632538
(43) Veröffentlichungstag der Anmeldung: 18.02.1998
(73) Patentinhaber: Brita GmbH, 65232 Taunusstein (DE)
(72) Erfinder: Bairischer, Uwe, Londonderry, NH 03053 (US)
(74) Vertreter: Weber, Dieter, Dr. Dipl.-Chem.

(56) Entgegenhaltungen:
- WO-A-96/21621
- US-A- 2 630 227
- US-A- 5 002 665

## Beschreibung

Die Erfindung betrifft eine mit kömigem Filtermaterial füllbare Filterkartusche etwa in Form eines oben offenen, durch einen Deckel verschließbaren Bechers mit einem Boden mit wenigstens einer Auslaßöffnung, mit Siebeinrichtungen und mit Seitenwänden für die Filterung von Flüssigkeiten, insbesondere Wasser.

Für das Filtem von Wasser ist es bekannt, als Filtermaterial lonenaustauscher und/oder Aktivkohle zu verwenden. Im Betrieb der Filterkartusche bekannter Filtereinrichtungen ist deren Längsmittelachse vorzugsweise vertikal so angeordnet, daß der Deckel oben ist und sich der Boden der Filterkartusche unten befindet. Das zu filternde Wasser fließt oben in den Deckel (durch Einlaßöffnungen) ein und verläßt die Filterkartusche unten am Boden. Solche Filterkartuschen werden in einen dafür vorgesehenen Trichter einer Wasserreinigungsvorrichtung eingesetzt. Der Trichter wird auf einen Auffang- bzw. Sammelbehälter für gefilterte Flüssigkeit aufgesetzt und vorzugsweise oben mit einem abnehmbaren Deckel verschlossen. Der Benutzer füllt zum Beispiel Leitungswasser oben in den Trichter ein, welches nach Durchlaufen der Filtereinrichtung im Sammelbehälter für die Teeaufbereitung oder dergleichen verwendet werden kann.

Für eine möglichst effektive Filterwirkung ist es erwünscht, der durch die Filtereinrichtung eintretenden Flüssigkeit, dem Wasser, eine möglichst große Oberfläche an Filtermaterial anzubieten bzw. die Flüssigkeit zu zwingen, sich einer möglichst intensiven und umfangreichen Adsorptionstätigkeit zu unterziehen. Bekanntlich erhält man bei Granulaten als Filtermaterial eine umso größere Wirkoberfläche, je kleiner die Größe des einzelnen Filterteilchens ist. Es kann vorkommen, daß in dem Filtermaterial Teilchen von etwa 200 µm und kleiner vorhanden sind. Die der zu filternden, duchlaufenden Flüssigkeit angebotene Wirkoberfläche ist damit erfreulich groß. Dieser Vorteil ist aber mit dem Nachteil verbunden, daß einige dieser kleinsten Granulatpartikel durch die Eintrittsöffnungen im Deckel und die Auslaßöffnungen im Boden hindurchtreten. Die dann teilweise auf der Flüssigkeitsoberfläche schwimmenden Partikel, zum Beispiel schwarze Aktivkohleteilchen, stören den Benutzer und sind unerwünscht.

Man ist bereits dazu übergegangen, ebene Siebgewebe in Form von Vliesen auf die innere Oberfläche des Bodens einer Filterkartusche aufzulegen und hat dadurch auch schon den Austritt kleinerer Partikel verhindert. Mit Nachteil sammeln sich aber Keime an solchen Vliesen und zum Beispiel aus Papierstoff hergestellten Siebgeweben an.

Eine Filterkartusche der eingangs näher bezeichneten Art ist aus der US-A-5,002,665 bekannt. Der ebene Boden dieser bekannten Filterkartusche weist in seinem inneren Bereich einen Kranz von acht Auslaßöffnungen auf, wobei die gesamte Kreisfläche des Bodens um die Auslaßöffnungen mit einer Filtergaze zwischen dem Filtermaterial und dem Boden versehen ist. An der äußeren Kante ist die scheibenförmige Filtergaze längs eines Kreises am Boden befestigt, vorzugsweise durch Schweißen/Schmelzen. Die Größe der Poren liegt im Bereich zwischen 20 und 80 um, wobei 45 um bevorzugt ist. Zwischen den einzelnen Auslaßöffnungen ist die Filtergaze nicht mit dem Boden verbunden, so daß sich innerhalb der kreisförmigen Schweißlinie über dem Mittelbereich des Bodens und der Filtergaze ein schmaler Raum oder sich wenigstens bevorzugte Strömungsverbindungen zu einigen Auslaßöffnungen bilden kann/können. Der Durchfluß der zu reinigenden Flüssigkeit wird dadurch erschwert, die Durchfließgeschwindigkeit wird herabgesetzt, und die Filterwirkung leidet. Außerdem liegt die scheibenförmige Filtergaze auf der Innenseite des Kartuschenbodens auf und bildet für radial am Boden in den Gazebereich strömende Flüssigkeit einen Widerstand. Dadurch wird ebenfalls die Durchfließgeschwindigkeit der zu reinigenden Flüssigkeit reduziert. Die erwähnte Größe der Poren von weniger als 80 µm trägt ebenfalls zu einer starken Herabsetzung der Durchlaufgeschwindigkeit der zu reinigenden Flüssigkeit bei.

Es hat sich außerdem gezeigt, daß bei zu geringen Durchflußgeschwindigkeiten eine zu starke Keimbildung wahrscheinlich ist, so daß eine Filterkartusche der bekannten Art für die Trinkwasseraufbereitung nicht geeignet ist.

Um einen besseren Durchfluß der zu reinigenden Flüssigkeit zu gewährleisten, schlägt die US-A-2,630,227 vor, mehr als nur acht Auslaßöffnungen vorzusehen. Ein oben und unten offener Zylindermantel hat nach innen ragende Ringflansche, in welche Lochplatten eingelegt werden. Auf diese wird wiederum eine Kreisscheibe aus grober Leinwand oder Juteleinen aufgelegt und auf diese wiederum ein kreisscheibenförmiges Drahtsieb. Diese drei unterschiedlichen perforierten Kreisscheiben sind nicht miteinander verbunden, sondern werden nur durch das Reinigungsmittel gegeneinander gedrückt. Wieder können ungleichmäßige Strömungskanäle entstehen, so daß der Durchfluß des zu reinigenden Wassers zu klein oder zu groß ist. Über die Porengröße ist nichts ausgesagt.

Der Erfindung liegt die Aufgabe zugrunde, die bekannte Filterkartusche so zu verbessern, daß einerseits auch kleine Granulatpartikel von zum Beispiel ≤ 200 µm Breite nicht durch die Auslaßlöffnungen im Boden austreten können und gleichwohl ein guter Durchfluß der zu reinigenden Flüssigkeit gewährleistet ist.

Gemäß der Erfindung wird diese Aufgabe durch die Merkmale des Patentanspruchs 1 gelöst.

Für die Verwendung von Siebgeweben aus Kunststoff mit Porengrößen von 80 bis 300 um ist es für den Durchfluß nicht problemlos möglich, jede Gestalt und Größe von Auslaßöffnungen im Boden der Filterkartusche vorzusehen. Andererseits ist die Verwendung von sehr feinen Sieben mit Poren in der genannten Größenordnung aber erforderlich, um diese kleinen Granulatpartikel erfolgreich zurückzuhalten. Wenn man nun die Anzahl der Auslaßöffnungen im Boden im Bereich zwischen 1 und 64 auswählt, hat man überraschend festgestellt, daß die befürchteten Durchflußprobleme minimiert werden. Der befürchtete Durchflußstau und das bei vielen Beispielen festgestellte Blockieren des Flüssigkeitsdurchflusses können beim Einsatz des bestimmten, ausgewählten Gewebes als Einlage mit einem Rahmen bei 1 bis 64 Auslaßöffnungen im Boden vermieden werden. Damit hat man eine Lösung gefunden, sowohl die kleinen Granulatpartikel zurückzuhalten als auch den Durchfluß der zu filternden Flüssigkeit durch die Filterkartusche aufrecht zu erhalten.

Man kann die Gewebeeinlage mit einem umziehenden und die Einlage stützenden Rahmen entweder sogleich mit dem Boden spritzgießen oder in diesem anordnen, vorzugsweise bündig mit diesem. Wesentliche Merkmale der neuen Filterkartusche sind herstellungsbedingt. So ist die Gewebeeinlage bei der praktischen Produktion ein Stück, und sie wird als ein Stück eingelegt Das Werkzeug spritzt dann die gewünschte Anzahl Auslaßöffnungen, wobei sich ein Rahmen bildet. Bei der Benutzung, im Reinigungsbetrieb findet radial zur Mitte hin strömende Flüssigkeit bei dem bündigen Einlassen des Rahmens im Boden des Bechers keinen Widerstand vor, es entfallen Verwirbelungen, und die Durchfließgeschwindigkeit der zu reinigenden Flüssigkeit wird kaum verringert.

Durch den mit dem Boden verbundenen Rahmen erhält der Becher mit Vorteil eine große Festigkeit, weil insbesondere der Boden des Bechers stabil genug ist, den auftretenden Beanspruchungen standzuhalten.

Unter anderem wird gelehrt, das Verhältnis der Austrittsfläche zur gesamten Bodenfläche auf zwischen 0,44 und 0,12 einzustellen. Gerade im Hinblick auf die Festigkeit muß die Bodenfläche eine Mindestgröße haben, um die Granulatpartikel zurückzuhalten und den Filterbecher fest genug auszugestalten. Andererseits benötigt man eine hinreichend große Austrittsfläche, damit die zu reinigende Flüssigkeit gut durch die Auslaßöffnungen hinausfließen kann. Außer der geforderten Festigkeit können auch die Strömungsverhältnisse Einfluß auf das angegebene Verhältnis haben. Nach der Lehre der Erfindung kann man mit wenig Material die Aufgabe lösen und die gekennzeichnete Filterkartusche im Rahmen gültiger Preisvorstellungen herstellen.

Der Rahmen der Gewebeeinlage kann etwa so dick wie der Boden der Filterkartusche sein, so daß sich die derart aufgebaute Gewebeeinlage bündig in der Bodenfläche befinden kann. Die Durchströmbedingungen für die zu filtemde Flüssigkeit werden dadurch weiter verbessert. Hält man nun bei dieser Anzahl Auslaßöffnungen im Boden das Verhältnis der Austrittsfläche zur gesamten Bodenfläche in dem genannten Bereich, dann stellt man die geringste der etwa vorgefundenen Drosselwirkungen fest. Der Fachmann erhält damit die Lehre an die Hand, die Auslaßöffnungen mit bestimmter Größe und Anzahl so im Boden vorzusehen, daß sich im Verhältnis zu der gesamten, zur Verfügung stehenden Bodenfläche nur eine bestimmte Austrittsfläche ergibt.

Die durch die Erfindung angestrebten Wirkungen sind besonders günstig, wenn 3 - 16 Auslaßöffnungen im Boden vorgesehen sind und das Verhältnis der Austrittsfläche zur gesamten Bodenfläche im Bereich von 0,38 (= 1/2,6) bis 0,16 (= 1/6,25) liegt. Bei vielen Ausführungsbeispielen nach der Erfindung hat sich gezeigt, daß man durch diese Auswahl der Anzahl an Auslaßöffnungen im Boden einerseits und des genannten Verhältnisses der Flächen zueinander andererseits geringstmögliche Stauwirkungen, wenn überhaupt, für die durchfließende Flüssigkeit erzielen kann.

Die zahlreichen Untersuchungen und Versuche der Anmelderin haben zu der besonders bevorzugten Lösung geführt, wonach sechs Auslaßöffnungen im Boden der jeweiligen Kartusche vorzusehen sind und das Verhältnis der Austrittsfläche zur gesamten Bodenfläche etwa 0,303 (= 1/3,3) beträgt. Der Durchfluß der Flüssigkeit erfolgt ungestört ohne Stau oder Drosselwirkung, die sich gegebenenfalls durch die Oberflächenspannung der zu filtemden Flüssigkeit oder auch die Druckverhältnisse ergeben könnten.

Es ist auch günstig, wenn man den Gewebeeinsatz mit einem in das Innere der Filterkartusche vorstehenden Teil, zum Beispiel einer Wölbung, derart ausgestaltet, daß eine Berührung zwischen dem Gewebeeinsatz und dem Filtermaterial erfolgt. Dadurch hat man einerseits wiederum das gute Rückhaltevermögen durch die Siebeinrichtung mit der geringen Porengröße und hat andererseits die Oberflächenspannung einer Flüssigkeit der Qualität von Wasser aufgebrochen mit der Folge eines guten Durchfließvermögens.

Sowohl im Deckelbereich als auch im Bodenbereich der erfindungsgemäßen Filterkartusche ergeben sich günstige Fließprobleme der zu filternden Flüssigkeit, obwohl die Druckverhältnisse bekanntlich bei herkömmlichen Filterkartuschen manchmal die Blockierwirkung nicht überwinden können. Die Beachtung der erfindungsgemäßen Lehre behebt den Mangel der bekannten Filterkartuschen. Etwaige Luftpolster werden weggedrückt, so daß dem Druck der Flüssigkeitssäule, auch wenn dieser gering ist, keine wesentliche Gegendrücke entgegenwirken. Die zu filtemde Flüssigkeit kann ohne Probleme durch das Filtermaterial strömen, und die kleinen Partikel des Filtermaterials werden gleichwohl in hervorragender Weise zurückgehalten.

Auch wenn die Kunststoffäden nicht gewebt sind, soll hier unter dem Begriff "Gewebeeinlage" bzw. "Siebgewebe" dennoch ein netzartiger Siebaufbau verstanden werden. Dünne Kunststoffäden kreuzen sich quer oder schräg und schaffen dadurch Poren einer Größe, wie sie bei den Schlitzen spritzgießtechnisch nicht mehr in dieser Kleinheit hergestellt werden können. Wie eine Gaze kann man auch die Gewebeeinlage aus Kunststoff ausgestalten und beschneiden.

Dabei kann es herstellungstechnisch von Vorteil sein, die Gewebeeinlage unlösbar mit dem Boden der Filterkartusche oder auch mit dem Deckel zu verbinden. So kann der Spritzgußhersteller zum Beispiel den Boden der Filterkartusche oder die gesamte Kartusche so formen, daß die Gewebeeinlage eingespritzt wird, zum Beispiel auch verschweißt wird. Der das eigentliche Kunststoffgewebe umziehende und stützende Rahmen kann bündig im Boden angeordnet werden. Ein solcher Filterbecher kann als Zwischenprodukt einem Füllbetrieb zugeliefert werden, wo er in Magazinen zur Verfügung steht und von einer automatischen Füll- und Verschließanlage ergriffen wird. Weder ein Automat noch das Personal des Herstellers muß sich dann mit einzelnen Gewebeeinlagen abgeben und diese mit besonderer Sorgfalt transportieren oder anordnen. Die Filterkartusche muß zum Füllen und Verschließen ohnehin richtig positioniert werden, und wenn der Boden unlösbar mit der Gewebeeinlage verbunden ist, benötigt man keinen zusätzlichen und besonderen Montageschritt mehr.

Günstig ist es erfindungsgemäß ferner, wenn das Kunststoffgewebe hydrophilisiert ist. Zur Verbesserung, d.h. zur Verkürzung der Durchflußzeit der zu filtemden Flüssigkeit, ist es zweckmäßig, das Siebgewebe aus Kunststoff mit Stoffen zu behandeln, durch welche das Gewebe hydrophiler wird. Bei diesen Stoffen kann es sich um Flüssigkeiten handeln, durch welche die Oberfläche des Kunststoffes beeinflußt wird.

In ähnlicher Weise kann man erfindungsgemäß auch ein bakteriostatisch behandeltes Kunststoffgewebe in der vorgenannten Filterkartusche verwenden. Hier gibt es verschiedene Verfahren, zu denen auch die Einwirkung von Dämpfen, das Bestrahlen und dergleichen gehören.

Weitere Vorteile, Merkmale und Anwendungsmöglichkeiten der vorliegenden Erfindung ergeben sich aus der folgenden Beschreibung einer bevorzugten Ausführungsform in Verbindung mit den anliegenden Zeichnungen. In diesen zeigen:
- Figur 1: eine Ansicht des Bodens der Filterkartusche, wenn man von außen in Richtung der Längsmittelachse nach oben blickt und
- Figur 2: eine Querschnittsansicht durch die Filterkartusche gemäß der Erfindung.

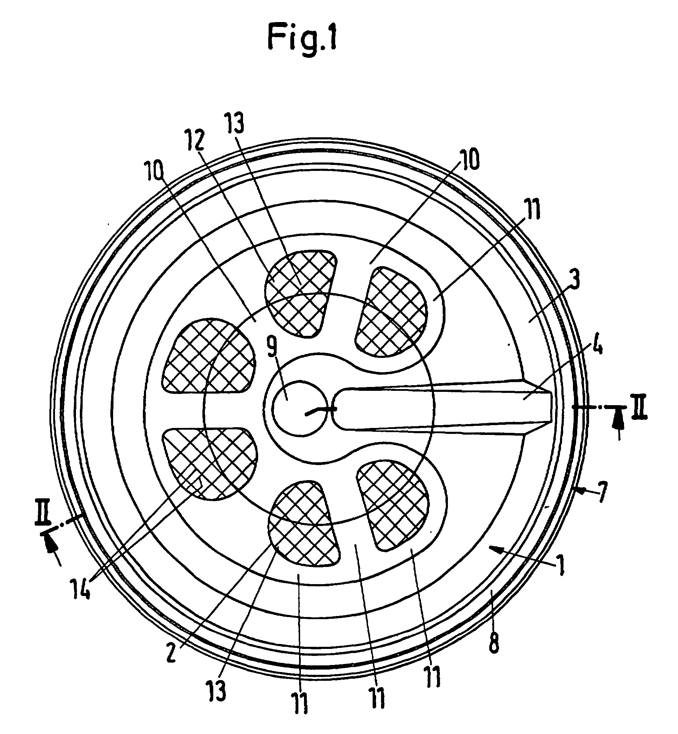

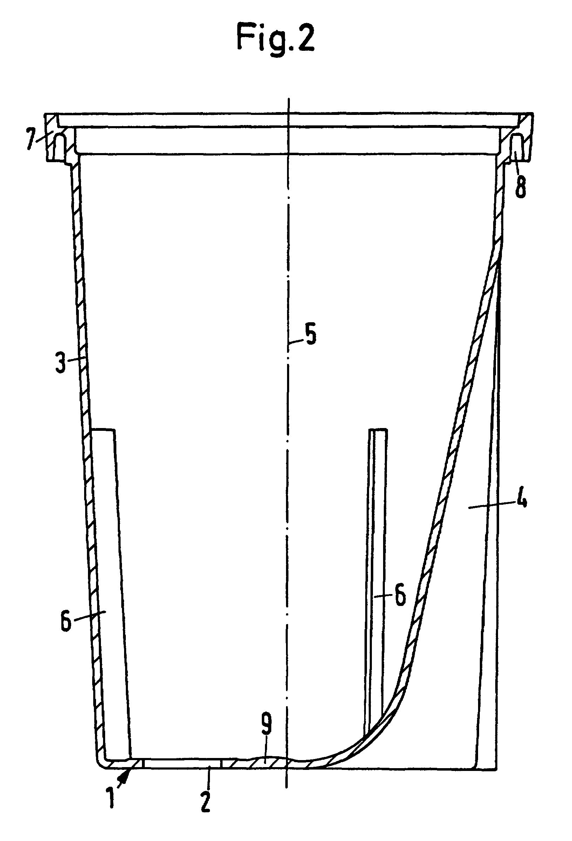

Die hier in den Zeichnungen bei der betrachteten Ausführungsform dargestellte Filterkartusche hat die Form eines oben offenen, durch einen nicht dargestellten Deckel verschließbaren Bechers. In dem Boden 1 befinden sich sechs Auslaßöffnungen 2, und geschJossene Seitenwände 3 erstrecken sich schwach konisch erweiternd vom Boden 1 nach oben. An einer Stelle des Umfanges sind die Seitenwände 3 durch eine Seitenkerbe 4 unterbrochen, die man auch dazu verwenden kann, die Drehpositionierung der Filterkartusche beim Anordnen im Filtergerät durch einen lockeren Nut-Federeingriff zu steuern. In der Querschnittsansicht der Figur 2 ist diese Seitenkerbe 4 deutlich zu erkennen, weil der Schnitt nach der gewinkelten, gestrichelten Linie II-II genau durch die Mitte dieser Seitenkerbe 4 verläuft. Folgt man dieser gestrichelten Schnittlinie in Figur 1, dann liegt der Knickpunkt im Zentrum des Bodens 1, durch welchen die in Figur 2 strichpunktiert und vertikal dargestellte Längsmittelachse 5 verläuft. Von dort setzt sich die Schnittlinie II-II nach links so fort, daß eine Auslaßöffnung 2 im Boden 1 geschnitten wird.

In Figur 2 erkennt man zwei Stapelrippen 6, die auf der Innenseite der konischen Seitenwände 3 angeordnet sich und sich vom Boden 1 aus über die halbe Höhe der Seitenwände 3 erstrecken. Sie sind winkelig gleichmäßig so verteilt, daß bei dieser Ausführungsform zum Beispiel drei Stapelrippen 6 angeordnet sind. Die fertigen Filterkartuschen werden nach ihrer Produktion auf diese Stapelrippen 6 nach dem Ineinanderstecken zur Lagerung aufgesetzt. Vor der Montage der gesamten Filtereinrichtung, insbesondere dem Verbinden der Filterkartusche mit dem nicht gezeigten Deckel, können diese leeren Filterkartuschen in stangenförmigen Stapeln im Magazin gelagert werden.

Am oberen weiten Ende der konusförmigen Seitenwände 3 befindet sich ein Dichtflansch 7 mit einer Ringnut 8.

Die Seitenwände 3 sind mit dem Boden 1 einstückig gespritzt, wobei man in Figur 2 in der Schnittansicht im Boden unten an der verdickten Stelle die Zuführmitte 9 erkennt. Beim spritzgießtechnischen Herstellen fließt der Kunststoff von dieser Mittelzufuhr 9 durch die radialen Kanäle 10 nach außen, wobei die Auslaßöffnungen 2 in dem sich bildenden Rahmen 11 mit den Gewebeeinlagen 12 gebildet werden. Diese Gewebeeinlagen 12 sind über den Rahmen 11 im Boden 1 eingespritzt und einstückig mit diesem verbunden. Durch eine Kreuzschraffur in Figur 1 sind die Poren 13 zwischen den Kunststoffäden 14 angedeutet.

Bei der hier gewählten Ausführungsform sind sechs Auslaßöffnungen 2 innerhalb des C-förmigen Rahmens 11 vorgesehen worden. Diese Austrittsfläche AF6 ist zur gesamten Bodenfläche ins Verhältnis gesetzt worden, wobei sich ein Wert von 1/3,3 = 0,303.... gebildet hat.

Bei einer anderen nicht dargestellten Ausführungsform mit drei Auslaßöffnungen und einer weiteren mit sechzehn Auslaßöffnungen hat sich bei einer vergleichsweisen Verhältnisbildung ergeben, daß das Verhältnis VF₃₋₁₆ in einem Bereich zwischen 1/2,6 = 0,384 einerseits und 1/6,25 = 0,16 andererseits liegt. Mit anderen Worten gilt 1/2,6 ≥ VF₃₋₁₆ ≥ 1/6,25.

Weitere Versuche haben für Ausführungsformen mit 1- 64 Öffnungen ergeben, daß die entsprechende Beziehung lautet 1/2,3 ≥ VF₁₋₆₄ ≥ 1/7,7.

VF6 ist dabei das Verhältnis der Austrittsfläche zur gesamten Bodenfläche im Falle von sechs Auslaßöffnungen. VF₃₋₁₆ ist das Verhältnis der Austrittsfläche zur gesamten Bodenfläche, wenn die Anzahl der Auslaßöffnungen im Bereich zwischen drei und sechszehn lag. Entsprechend verhält es sich bei dem dritten Beispiel, wenn die Anzahl der Auslaßöffnungen im Bereich zwischen 1 und 64 lag, dann war VF₁ = 1/2,3 und VF₆₄ = 1/7,7.

## Patentansprüche

1. Mit körnigem Filtermaterial füllbare Filterkartusche etwa in Form eines oben offenen, durch einen Deckel verschließbaren Bechers mit einem Boden (1) mit wenigstens einer Auslaßöffnung (2), mit Siebeinrichtungen in Form einer Gewebeeinlage (12) und mit Seitenwänden (3) für die Filterung von Flüssigkeiten, insbesondere von Wasser, wobei die Gewebeeinlage (12) einstückig über einen um 1 - 64 Auslaßöffnungen (2) gebildeten Rahmen (11) aus Kunststoff mit dem Boden (1) verbunden ist, der gebildete Rahmen (1) die sich ergebenden einzelnen Gewebeeinlagen (12) der Auslaßöffnungen (2) umzieht und stützt sowie bündig im Boden (1) angeordnet ist, wobei die Poren der Gewebeeinlagen (12) eine Größe von 80 - 300 µm haben und das Verhältnis VF₁₋₆₄ der Austrittsfläche (A) zur gesamten Bodenfläche (B) im Bereich von 0,44 (=1/2,3) bis 0,12 (=1/7,7) liegt.

2. Filterkartusche nach Anspruch 1, **dadurch gekennzeichnet, daß** 3 - 16 Auslaßöffnungen (2) im Boden (1) vorgesehen sind und das Verhältnis VF₃₋₁₆ der Austrittsfläche (A) zur gesamten Bodenfläche (B) im Bereich von 0,38 (=1/2,6) bis 0,16 (=1/6,25)liegt.

3. Filterkartusche nach Anspruch 1 bis 2, **dadurch gekennzeichnet, daß** sechs Auslaßöffnungen (2) im Boden (1) vorgesehen sind und das Verhältnis (VF₆) der Austrittsfläche (A) zur gesamten Bodenfläche (B) etwa 0,303 (=1/3,3) beträgt.

4. Filterkartusche nach einem der Ansprüche 1 bis 3, **dadurch gekennzeichnet, daß** das Kunststoffgewebe (12) hydrophilisiert ist.

5. Filterkartusche nach einem der Ansprüche 1 bis 4, **dadurch gekennzeichnet, daß** das Kunststoffgewebe (12) bakteriostatisch behandelt ist.

## Claims

1. Filter cartridge which can be filled with granular filter material, approximately in the shape of a cup, open at the top, which can be closed by a lid, with a base (1) with at least one outlet aperture (2) with a sieve means in the form of a fabric insert (12) and with side walls (3) for filtering liquids, in particular water, the fabric insert (12) being connected to the base (1) in one piece via a plastics frame (11) formed around 1-64 outlet apertures (2), the formed frame (I) enclosing and supporting the resulting individual fabric inserts (12) of the outlet apertures (2) and being arranged flush in the base (1), the pores of the fabric inserts (12) having a size of 80-300 µm and the proportion VF₁₋₆₄ of the outlet surface (A) to the whole base surface (B) being in the range from 0.44 (=1/2.3) to 0.12 (=1/7.7).

2. Filter cartridge according to claim 1, **characterized in that** 3-16 outlet apertures (2) are provided in the base (1) and the proportion VF₃₋₁₆ of the outlet surface (A) to the whole base surface (B) is in the range of 0.38 (=1/2.6) to 0.16 (=1/6.25).

3. Filter cartridge according to claim I to 2, **characterized in that** six outlet apertures (2) are provided in the base (1) and the proportion (VF₆) of the outlet surface (A) to the whole base surface (B) is approximately 0.303 (=1/3.3).

4. Filter cartridge according to one of claims 1 to 3, **characterized in that** the plastics fabric (12) is hydrophilized.

5. Filter cartridge according to one of claims 1 to 4, **characterized in that** the plastics fabric (12) is bacteriostatically treated.

## Revendications

1. Cartouche de filtrage pouvant être remplie d'un matériau filtrant granulé et se présentant sensiblement sous la forme d'un récipient ouvert vers le haut et pouvant être fermé par un couvercle, ledit récipient comportant un fond (1) dans lequel est ménagée au moins une ouverture d'écoulement (2), des dispositifs de tamisage se présentant sous la forme d'une couche de textile (12) et des parois latérales (3) pour le filtrage de liquides, en particulier de l'eau, dans laquelle la couche de textile (12) est raccordée de façon solidaire au fond (1) par un cadre (11) en matière plastique comportant 1 à 64 ouvertures d'écoulement (2), le cadre formé (1) change les couches de textile individuelles obtenues (12) des ouvertures d'écoulement (2) et est agencé en appui et à fleur dans le fond (1), et dans laquelle les pores des couches de tissu (12) ont une taille comprise entre 80 et 300 µm et le rapport VF₁₋₆₄ de la surface d'écoulement sur la surface totale (B) du fond est compris entre 0,44 (= 1/2,3) et 0,12 (= 1/7,7).

2. Cartouche de filtrage selon la revendication 1, **caractérisée en ce que** 3 à 16 ouvertures d'écoulement (2) sont ménagées dans le fond (1), et **en ce que** le rapport VF₃₋₁₆ de la surface de sortie (A) sur la surface totale (B) du fond est compris entre 0,38 (= 1/2,6) et 0,16 (= 1/6,25).

3. Cartouche de filtrage selon la revendication 1 et 2, **caractérisée en ce que** six ouvertures d'écoulement (2) sont ménagées dans le fond (1), et **en ce que** le rapport (VF₆) de la surface de sortie (A) sur la surface totale (B) du fond est sensiblement de 0,303 (= 1/3,3).

4. Cartouche de filtrage selon l'une des revendications 1 à 3, **caractérisée en ce que** le tissu synthétique (12) est hydrophilisé.

5. Cartouche de filtrage selon l'une des revendications 1 à 4, **caractérisée en ce que** le tissu synthétique (12) est traité de façon bactériostatique.
